# FASCICULE DE BREVET EUROPEEN

(11) **EP 3 300 968 B1**
(45) Date de publication et mention de la délivrance du brevet: **15.05.2019**
(21) Numéro de dépôt: 17188099.0
(22) Date de dépôt: 28.08.2017
(51) Int. Cl.: B60S 1/40

(54) **ADAPTATEUR CONSTITUTIF D'UN SYSTEME D ESSUYAGE**
BESTANDSADAPTER EINES SCHEIBENWISCHERSYSTEMS
ADAPTER CONSTITUTING A WIPER SYSTEM

(30) Priorité: 29.09.2016 FR 1659354
(43) Date de publication de la demande: 04.04.2018
(73) Titulaire: Valeo Systèmes d'Essuyage, 78322 Le Mesnil Saint Denis (FR)
(72) Inventeur: HOUSSAT, Stéphane, 63500 ISSOIRE (FR); GAUCHER, Vincent, 63500 ISSOIRE (FR); JOMARD, Olivier, 63500 ISSOIRE (FR)
(74) Mandataire: Valeo Systèmes d'Essuyage

(56) Documents cités:
- WO-A1-2016/061461
- FR-A1- 3 026 074
- US-A1- 2016 207 502

## Description

La présente invention se rapporte aux systèmes d'essuyage pour véhicule automobile, et concerne plus particulièrement un adaptateur qui est constitutif d'un tel système d'essuyage.

Un système d'essuyage, couramment dénommé essuie-glaces, pour véhicule automobile est conçu pour retirer, par balayage, les liquides et salissures qui peuvent perturber la vision qu'un conducteur du véhicule automobile a de son environnement. Ces essuie-glaces comprennent généralement un bras d'entraînement qui effectue un mouvement de va-et-vient angulaire autour d'un axe de rotation, et un balai d'essuyage allongé équipé d'une lame racleuse réalisée en un matériau élastique. En frottant contre une surface vitrée, avant ou arrière, du véhicule automobile, la lame racleuse en balaie l'eau et un certain nombre de salissures, et les évacue en dehors du champ de vision du conducteur.

Quelle que soit la configuration du balai d'essuyage, c'est-à-dire soit un balai d'essuyage comportant des étriers articulés qui retiennent la lame racleuse en plusieurs zones distinctes, soit un balai d'essuyage comportant une lame métallique qui maintient la lame racleuse sur toute sa longueur, le balai d'essuyage est rattaché à une partie terminale du bras d'entraînement par l'intermédiaire d'un dispositif de connexion qui comprend un connecteur monté solidaire du balai d'essuyage.

Dans un premier mode de liaison connu, un adaptateur, apte à être assemblé avec le connecteur du balai d'essuyage, est monté mobile en basculement autour d'un axe de fixation sur la partie terminale du bras d'entraînement. Ce premier mode de liaison est couramment utilisé pour les essuie-glaces destinés aux surfaces vitrées situées à l'avant du véhicule automobile. Dans un deuxième mode de liaison connu, le connecteur est raccordé à un arbre solidaire du bras d'entraînement. Ce deuxième mode de liaison est couramment rencontré dans les essuie-glaces destinés aux surfaces vitrées situées à l'arrière du véhicule automobile.

L'état de la technique comprend le document US2013/0239356A1 qui décrit un dispositif de fixation comprenant un connecteur qui est porteur du balai d'essuyage, et un adaptateur de raccordement du connecteur à une partie terminale du bras d'entraînement. L'état de la technique comprend aussi les documents FR 3 026 074 A1, WO 2016/061461 A1 et US 2016/207502 A1 qui montrent le préambule de la revendication 1.

Un problème général posé dans le domaine réside dans une nécessité de disposer d'un adaptateur apte à coopérer de manière efficace et pérenne avec une partie terminale du bras d'entraînement qui est susceptible d'être de conformation variée.

Plus particulièrement, il est souhaitable de disposer d'un adaptateur qui permette des opérations de maintenance du système d'essuyage qui soient simples et rapides pour permettre à un utilisateur inexpérimenté de les effectuer aisément. Il est notamment souhaitable qu'une opération de remplacement d'un balai d'essuyage usé par un balai d'essuyage neuf puisse se faire facilement et sans risque de détériorer le dispositif de connexion et plus particulièrement l'adaptateur.

Plus particulièrement encore, il est souhaitable de disposer d'un adaptateur qui interdise un déverrouillage inopiné de l'adaptateur rapporté sur la partie terminale du bras d'entraînement, lors de l'utilisation du système d'essuyage mis en mouvement le long de la surface vitrée.

Un but de la présente invention est de proposer un adaptateur qui est agencé pour permettre des opérations de maintenance simples et rapides, tout en participant d'une liaison robuste et pérenne entre un balai d'essuyage et une partie terminale du bras d'entraînement.

Un adaptateur de la présente invention est un adaptateur destiné à équiper une partie terminale d'un bras d'entraînement. L'adaptateur comprend au moins une partie avant dont au moins une section est agencée en « U » et qui comporte une paroi supérieure avant et deux parois latérales avant. L'adaptateur comprend au moins une partie arrière dont au moins une section est agencée en « U » et qui comporte une paroi supérieure arrière et deux parois latérales arrière.

Selon la présente invention, la partie avant et la partie arrière sont articulées l'une à l'autre par l'intermédiaire d'un moyen d'articulation interposé entre la paroi supérieure avant et la paroi supérieure arrière, et la partie supérieure arrière comprend un bouton qui émerge au-dessus de la paroi supérieure arrière et au moins un moyen de rotation configuré pour relier l'adaptateur à un connecteur, ce moyen de rotation étant ménagé dans l'une des parois latérales avant.

L'adaptateur comporte avantageusement l'une quelconque au moins des caractéristiques suivantes, prises seules ou en combinaison :
- la partie avant et la partie arrière sont alignées selon un axe longitudinal de l'adaptateur,
- la partie avant comprend un corps et une extrémité avant, le corps étant relié à la partie arrière par l'intermédiaire du moyen d'articulation,
- l'extrémité avant et le corps sont délimités par une bordure qui surplombe le corps,
- la bordure est équipée d'au moins un crochet,
- la paroi supérieure arrière est équipée d'un bouton pourvu d'une dent,
- au moins une paroi latérale arrière est équipée d'une gorge délimitée au moins par une rampe,
- l'adaptateur est pourvu d'un moyen d'actionnement de la partie arrière,

La présente invention a aussi pour objet un dispositif de connexion formé d'un connecteur et d'un tel adaptateur.

La présente invention a aussi pour objet un bras d'entraînement comprenant au moins une partie terminale conformée en « U » et délimitée par une première paroi et par deux deuxièmes parois délimitant un volume intérieur dans lequel est reçu un tel adaptateur ou un tel dispositif de connexion.

De préférence, la première paroi est pourvue d'un orifice de réception d'un bouton pourvu d'une dent, l'orifice comprenant un bord transversal avant contre lequel le bouton prend appui, la dent s'étendant au-dessus de la première paroi.

La présente invention a aussi pour objet un système d'essuyage comprenant un tel bras d'entraînement, un connecteur solidaire d'un balai d'essuyage et un tel adaptateur reliant à rotation le connecteur au bras d'entraînement.

La présente invention a aussi pour objet un procédé d'assemblage d'un tel adaptateur avec une partie terminale d'un bras d'entraînement, dans lequel le procédé d'assemblage comprend :
- une première étape de mise en contact d'une bordure de l'adaptateur contre une arête avant d'une première paroi de la partie terminale,
- une deuxième étape qui consiste en une rotation de l'adaptateur vis-à-vis de la partie terminale autour du contact entre la bordure et l'arête avant opéré au cours de la première étape,
- une cinquième étape où une dent d'un bouton de l'adaptateur franchit la première paroi et s'étend au-dessus de celle-ci.

De préférence, il est prévu entre la deuxième étape et la cinquième étape, alternativement ou cumulativement :
- une troisième étape qui consiste en un verrouillage manuel de l'adaptateur dans la partie terminale,
- une quatrième étape qui consiste en un verrouillage automatique de l'adaptateur dans la partie terminale.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'un système d'essuyage selon l'invention,
- la figure 2 est une vue d'un dispositif de connexion de la présente invention participant du système d'essuyage illustré sur la figure 1,
- la figure 3 est une vue de côté d'un adaptateur qui est constitutif du dispositif de connexion illustré sur la figure 2 et qui est représenté en position de repos,
- la figure 4 est une vue de côté de l'adaptateur illustré sur la figure 3 et qui est représenté en position d'utilisation,
- la figure 5 est une vue de côté de l'adaptateur illustré sur les figures 3 et 4 et qui est représenté en position de montage,
- la figure 6 est une vue de côté d'une variante de réalisation de l'adaptateur représenté sur les figures 3 à 5,
- la figure 7 est une vue de dessus de l'adaptateur représenté sur la figure 6,
- la figure 8 est une vue en perspective de dessous de l'adaptateur représenté sur les figures 6 et 7,
- la figure 9 est une vue de dessous d'une partie terminale d'un bras d'entraînement participant du système d'essuyage illustré sur la figure 1,
- la figure 10 est une vue en perspective de face de la partie terminale illustrée sur la figure 9,
- la figure 11 est une illustration schématique des étapes d'un procédé d'assemblage de l'adaptateur illustré sur les figures 3 à 7 sur la partie terminale du bras d'entraînement représentée sur les figures 9 et 10.

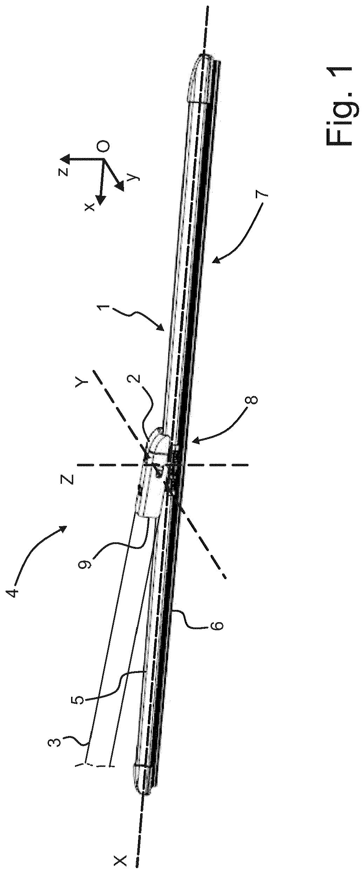

Sur les figures, les dénominations longitudinale, transversale, verticale, latérale, avant, arrière, gauche, droite, supérieure, inférieure, se réfèrent à l'orientation d'un balai d'essuyage 1 illustré sur la figure 1. Une direction longitudinale correspond à un axe longitudinal X selon lequel s'étend le balai d'essuyage 1 et/ou un adaptateur 2 de la présente invention. Une direction transversale correspond à celle d'un axe transversal Y qui est perpendiculaire à l'axe longitudinal X. Les dénominations gauche et droite s'apprécient par rapport à une position le long de l'axe transversal Y, de part et d'autre de l'axe longitudinal X. Une direction verticale, parallèle à celle d'un axe vertical Z, est perpendiculaire aux directions longitudinale et transversale susvisée. Les dénominations supérieure ou inférieure se rapportent à des orientations parallèles à l'axe vertical Z, la dénomination inférieure contenant le plan du pare-brise. Pour les directions longitudinales, les dénominations extérieure ou intérieure s'apprécient par rapport à un point de pivotement du balai d'essuyage 1 sur un bras d'entraînement 3 du balai d'essuyage 1, la dénomination intérieure correspondant à la partie où le bras d'entraînement 3 et un demi-balai s'étendent, la dénomination extérieure correspondant à la partie où l'autre demi-balai s'étend.

Les directions évoquées ci-dessus sont illustrées dans un repère orthonormé Oxyz représenté sur les figures. Dans ce repère, l'axe Ox représente la direction longitudinale, l'axe Oy représente la direction transversale, et l'axe Oz représente la direction verticale.

Sur la figure 1, un véhicule automobile est couramment équipé d'un système d'essuyage 4 pour évacuer une eau et/ou des salissures présentes sur une surface vitrée, notamment une lunette arrière ou un pare-brise de véhicule automobile. Le système d'essuyage 4 comprend le bras d'entraînement 3 qui est apte à effectuer un mouvement de va-et-vient angulaire le long et au-dessus de la surface vitrée.

Le système d'essuyage 4 comprend aussi le balai d'essuyage 1 qui s'étend selon un axe principal, dit axe longitudinal X parallèle à l'axe Ox. Le balai d'essuyage 1 comprend au moins un déflecteur d'air 5 et une lame racleuse 6. Le déflecteur d'air 5 est prévu pour transformer une pression appliquée par un flux d'air circulant le long de la surface vitrée en une force d'appui du balai d'essuyage 1 contre la surface vitrée du véhicule automobile. La lame racleuse 6 est la pièce du balai d'essuyage 1 en contact direct avec la surface vitrée pour évacuer l'eau et/ou les salissures présentes sur cette dernière. Le déflecteur d'air 5 et la lame racleuse 6 forment un ensemble semi-rigide 7 qui est porté par un dispositif de connexion 8, interposé entre le bras d'entraînement 3 et l'ensemble semi-rigide 7.

Le dispositif de connexion 8 assure une liaison mécanique entre une partie terminale 9 du bras d'entraînement 3 et le balai d'essuyage 1 et permet ainsi de séparer le balai d'essuyage 1 du bras d'entraînement 3, en vue d'un remplacement du balai d'essuyage 1. La présente invention vise notamment à proposer ledit adaptateur 2 qui est agencé pour faciliter une telle opération de remplacement, tout en sécurisant de manière efficace ladite liaison mécanique. Autrement dit, l'adaptateur 2 est particulièrement approprié pour un marché d'après-vente du balai d'essuyage 1.

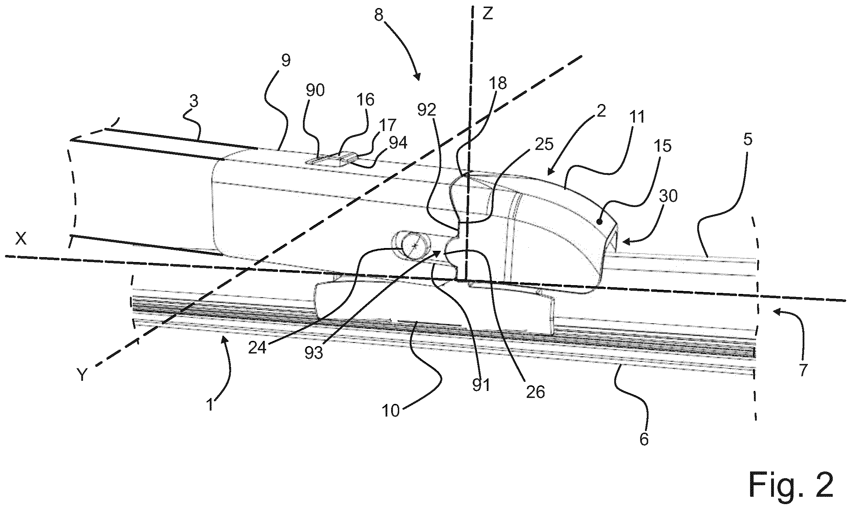

Dans sa généralité, le dispositif de connexion 8 de la présente invention comprend de préférence en tout et pour tout deux pièces, dont l'adaptateur 2 et un connecteur 10, visibles ensemble sur la figure 2, qui représente l'adaptateur 2 de la présente invention en position d'utilisation. Dans cette position d'utilisation, l'adaptateur 2 est rapporté sur la partie terminale 9 du bras d'entraînement 3, selon un procédé de l'invention décrit plus loin.

Le connecteur 10 est apte à porter le balai d'essuyage 1 et est monté en rotation sur l'adaptateur 2. L'adaptateur 2 est prévu pour être fixé à la partie terminale 9 du bras d'entraînement 3. Selon un mode de réalisation de l'invention, l'adaptateur 2 et le connecteur 10 sont réalisés par moulage d'un matériau synthétique, par exemple un matériau de la famille des Polyoxyméthylènes, connue sous l'acronyme POM, ou par moulage d'un mélange de matériaux polymères, par exemple un mélange de polymères de la famille des polycarbonates et de la famille des Acrylonitrile Butadiène Styrène, connue sous l'acronyme ABS. L'adaptateur 2 d'une part et le connecteur 10 d'autre part sont de préférence chacun d'un seul tenant. Autrement dit, l'adaptateur 2 d'une part et le connecteur 10 d'autre part sont monoblocs et ne peuvent être scindés en plusieurs morceaux qu'à partir d'une destruction de l'adaptateur 2 ou du connecteur 10. La partie terminale 9 est quant à elle par exemple réalisée par pliage d'un feuillard métallique, tel qu'une tôle en acier, en aluminium ou analogue ou bien par moulage d'une matière synthétique.

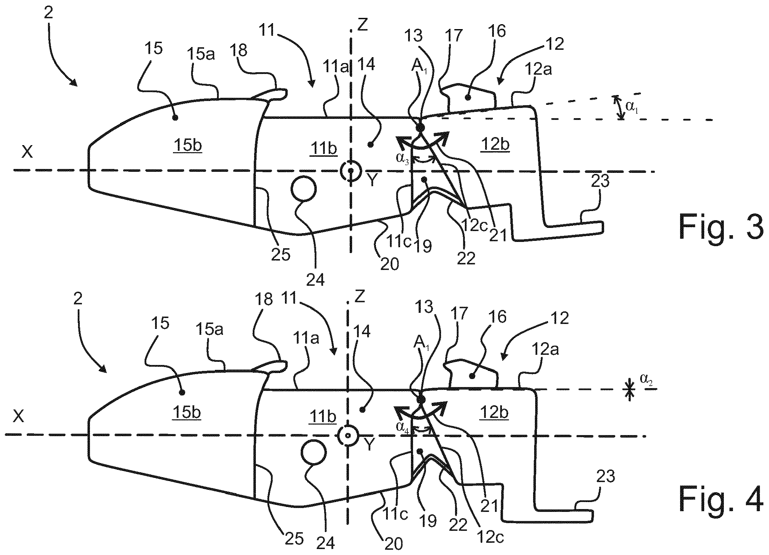

En se reportant sur les figures 3 à 5, l'adaptateur 2 est étendu selon l'axe longitudinal X et comporte une partie avant 11 et une partie arrière 12 qui sont articulées l'une à l'autre. La partie avant 11 et la partie arrière 12 sont successives l'une à l'autre le long de l'axe longitudinal X et sont alignées l'une après l'autre selon l'axe longitudinal X. La partie avant 11 et la partie arrière 12 sont mobiles l'une par rapport à l'autre autour d'un axe d'articulation A1 qui est orthogonal à l'axe longitudinal X, à l'axe vertical Z et parallèle à l'axe transversal Y. Autrement dit, la partie avant 11 et la partie arrière 12 sont montées en bascule l'une par rapport à l'autre autour de l'axe d'articulation A1. La partie avant 11 et la partie arrière 12 sont reliées l'une à l'autre par un moyen d'articulation 13 qui est interposé entre la partie avant 11 et la partie arrière 12 et qui forme un moyen de liaison entre la partie avant 11 et la partie arrière 12.

La partie avant 11 de l'adaptateur 2 comprend un corps 14 et une extrémité avant 15. Le corps 14 est la portion de la partie avant 11 qui est reliée à la partie arrière 12 par l'intermédiaire du moyen d'articulation 13. Le corps 14 est placé en position intermédiaire entre l'extrémité avant 15 et la partie arrière 12. L'extrémité avant 15, autrement appelée tête de l'adaptateur, forme la portion extrême de la partie avant 11 située longitudinalement à l'opposé de la partie arrière 12. Autrement dit, le long de l'axe longitudinal X et depuis l'arrière de l'adaptateur 2 vers l'avant de celui-ci, sont successivement ménagés la partie arrière 12, le moyen d'articulation 13, le corps 14 et l'extrémité avant 15.

La partie avant 11 forme une référence fixe à l'égard de la partie arrière 12, cette dernière étant la portion de l'adaptateur 2 qui tourne autour de la partie avant 11 par le biais du moyen d'articulation 13.

La partie avant 11 et la partie arrière 12 présentent l'une et l'autre un profil transversal conformé en « U ». Autrement dit, selon une coupe transversale réalisée selon un plan de coupe parallèle au plan Oyz, la partie avant 11 et la partie arrière 12 comportent un profil transversal conformé en « U ». En d'autres termes, la partie avant 11 comprend une paroi supérieure avant 11a qui forme la base du « U » et deux parois latérales avant 11b, notamment parallèles ou sensiblement parallèles entre elles et orthogonales ou sensiblement orthogonales à la paroi supérieure avant 11a, qui forment les branches du « U » tandis que la partie arrière 12 comprend une paroi supérieure arrière 12a qui forme la base du « U » et deux parois latérales arrière 12b, sensiblement parallèles entre elles et sensiblement orthogonales à la paroi supérieure arrière 12a, qui forment les branches du « U ».

L'adaptateur 2 comprend encore un moyen de rotation agencé pour relier l'adaptateur 2 au connecteur 10, tout en autorisant une rotation de l'un par rapport à l'autre. Ce moyen de rotation autorise cette rotation autour de l'axe transversal Y. Le moyen de rotation peut être formé par une paire de torons qui émergent dans la structure évidée de l'adaptateur 2. Il peut également s'agir de paliers ménagés dans les parois latérales avant 11b.

De manière avantageuse, le moyen de rotation est disposé sur l'adaptateur 2 longitudinalement entre l'extrémité avant 15 et le moyen d'articulation 13.

La paroi supérieure avant 11a et la paroi supérieure arrière 12a sont avantageusement reliées l'une à l'autre par le moyen d'articulation 13. Autrement dit, le moyen d'articulation 13 est interposé entre la paroi supérieure avant 11a et la paroi supérieure arrière 12a.

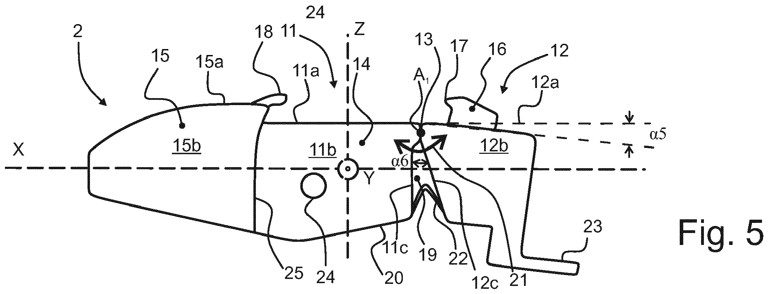

Sur la figure 3, l'adaptateur 2 est représenté en position de repos tandis que sur la figure 4 l'adaptateur 2 est représenté en position d'utilisation, c'est-à-dire tel que l'adaptateur 2 est illustré sur la figure 2. Autrement dit, sur la figure 3, l'adaptateur 2 est représenté hors tout, tel qu'issu de moulage par exemple, tandis que sur la figure 4, l'adaptateur 2 est représenté comme si l'adaptateur 2 était rapporté sur la partie terminale 9 du bras d'entraînement 3, qui n'est pas représentée sur la figure 4 pour conforter la lisibilité. Sur la figure 5, l'adaptateur 2 est illustré en position de montage, intermédiaire entre la position de repos et la position d'utilisation.

La position d'utilisation est la position dans laquelle l'adaptateur 2 est attaché à la partie terminale 9, notamment pendant les opérations de balayage du balai d'essuyage 1. La position de repos de l'adaptateur 2 est la position où il est séparé de la partie terminale 9, et où aucun effort n'est exercé sur la partie arrière 12. La position de montage de l'adaptateur 2 correspond à la position que prend la partie arrière 12 par rapport à la partie avant 11 pour autoriser l'introduction d'un bouton 16 à l'intérieur d'un orifice 90 de la partie terminale 9 du bras d'entrainement 3.

Sur la figure 3, la paroi supérieure avant 11a et la paroi supérieure arrière 12a forment un premier angle α₁ non-nul, préférentiellement compris entre 4° et 6°, préférentiellement égal à 5° tandis que, sur la figure 4, la paroi supérieure avant 11a et la paroi supérieure arrière 12a sont coplanaires et forment un deuxième angle α₂ qui, dans le cas présent, est sensiblement nul, suite à la mise en oeuvre du procédé de l'invention décrit ci-après. Selon un autre exemple de position d'utilisation, le deuxième angle α₂ peut être différent de 0°, en étant positif ou négatif, étant entendu que le deuxième angle α₂ est inférieur au premier angle α₁.

On notera qu'il est avantageux que le deuxième angle α₂ soit inférieur au premier angle α₁ tout en étant différent de 0°. Dans un tel cas, la partie arrière 12 et la partie avant 11 de l'adaptateur 2 en position d'utilisation s'étendent dans des plans entre lesquels est formé le deuxième angle α₂, ce dernier étant par exemple compris entre 1° et 4°. Une telle spécificité permet d'opérer un rattrapage d'un jeu longitudinal entre l'adaptateur 2 et la partie terminale 9 du bras d'entraînement 3.

La paroi supérieure arrière 12a est pourvue du bouton 16 qui émerge au-dessus de la paroi supérieure arrière 12a. Autrement dit, le bouton 16 surplombe la paroi supérieure arrière 12a en étant placé au-dessus d'un plan formé par cette dernière. Le bouton 16 est conformé pour venir s'imbriquer à l'intérieur de l'orifice 90 que comporte la partie terminale 9 du bras d'entraînement 3, tel qu'illustré sur la figure 2. Le bouton 16 comporte une dent 17 qui surplombe et s'étend par-dessus la paroi supérieure arrière 12a. Une telle dent 17 forme un rebord issu du bouton 16 qui s'étend longitudinalement vers l'avant. Autrement dit, la dent 17 du bouton 16 forme une proéminence. Le bouton 16, en particulier sa dent 17, est agencé pour enserrer une épaisseur d'une première paroi 95 de la partie terminale 9 du bras d'entrainement 3. On notera que la longueur du bouton 16 augmenté de sa dent 17, mesurée le long de la direction longitudinale X, est inférieure à une longueur de l'orifice 90, mesurée selon la même direction. On permet ainsi au bouton 16 équipé de sa dent 17 de traverser l'orifice 90.

L'extrémité avant 15 est pourvue d'un crochet 18 qui surplombe au moins partiellement la paroi supérieure avant 11a du corps 14. Le crochet 18 est préférentiellement ménagé à égale distance de l'une et de l'autre des parois latérales avant 11b. Autrement dit, le crochet 18 est de préférence ménagé en un plan longitudinal médian de l'adaptateur 2.

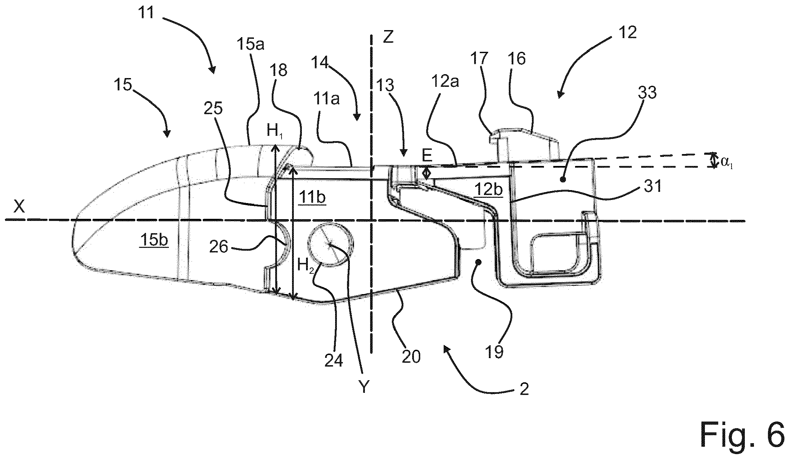

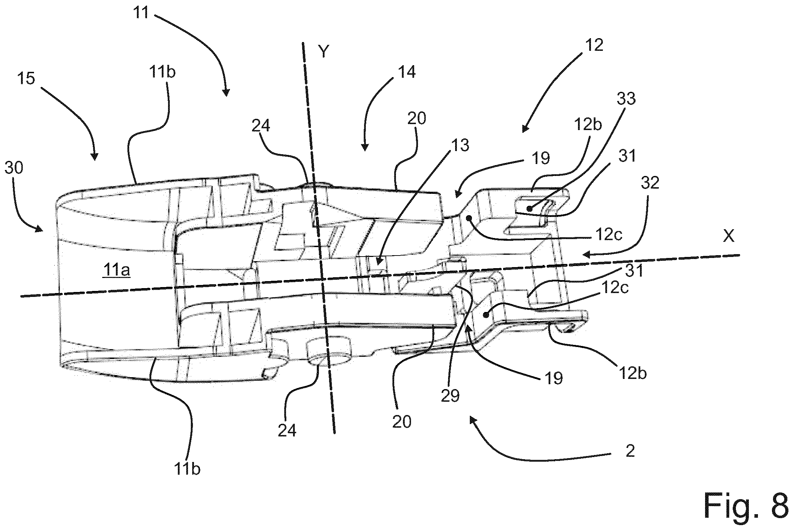

Les parois latérales avant 11b et les parois latérales arrière 12b sont séparées l'une de l'autre par une lumière débouchante 19 qui s'étend entre le moyen d'articulation 13 et un bord inférieur 20 de l'adaptateur 2. Le bord inférieur 20 est formé de l'extrémité inférieure des parois latérales avant 11b et des parois latérales arrière 12b, ce bord inférieur 20 étant situé à l'opposé de la paroi supérieure avant 11a et de la paroi supérieure arrière 12a. La lumière débouchante 19 permet un passage des parois latérales avant 11b et des parois latérales arrière 12b lors d'un mouvement de bascule 21 entre la partie avant 11 et la partie arrière 12 autour du moyen d'articulation 13. Autrement dit, lors du mouvement de bascule 21 de la partie avant 11 et/ou de la partie arrière 12 autour du moyen d'articulation 13, un rebord arrière 11c de la partie avant 11 et un rebord avant 12c de la partie arrière 12 sont aptes à se rapprocher l'un de l'autre ou à s'éloigner l'un de l'autre à partir d'un rétrécissement ou d'un élargissement de la lumière débouchante 19. La lumière débouchante 19 est par exemple conformée en « V » tel qu'illustré sur les figures 3 à 5. Selon un autre mode de réalisation illustré sur les figures 6 à 8, la lumière débouchante 19 est susceptible d'être de conformation différente, en « S » notamment.

Sur la figure 3, le bord arrière 11c et le bord avant 12c forment un troisième angle α₃ non-nul, préférentiellement compris entre 4° et 6°, préférentiellement égal à 5° tandis que, sur la figure 4, le bord arrière 11c et le bord avant 12c forment un quatrième angle α₄ qui est strictement inférieur au troisième angle α₃. Le quatrième angle α₄ définit la position d'utilisation.

Sur la figure 5, on notera qu'en position de montage, le quatrième angle peut être nul, notamment quand le bord arrière 11c est en appui contre le bord avant 12c. Dans cette situation, une lumière débouchante 19 ménagée entre ces deux bords est fermée. La lumière 19 est qualifiée de débouchante en ce sens qu'elle sépare la paroi supérieure avant 11a de la paroi supérieure 12a. La portion de lumière débouchante 19 ménagée entre les parois latérales avant 11b et arrière 12b s'évase en partant des parois supérieures avant 11a et arrière 12a et allant vers le bord inférieur 20 de l'adaptateur 2.

L'adaptateur 2 est par exemple pourvu d'une patte 22 qui s'étend à l'intérieur de la lumière débouchante 19 entre le bord arrière 11c et le bord avant 12c pour maintenir à une distance maximale la partie avant 11 et la partie arrière 12 lors du mouvement de bascule 21 de ces dernières l'une par rapport à l'autre. A cet effet, la patte 22 présente une longueur qui est supérieure à une longueur de la lumière débouchante 19 prise entre une extrémité libre du bord avant 12c et une extrémité libre du bord arrière 11c selon l'axe longitudinal X, en position d'utilisation de l'adaptateur 2, telle qu'illustrée sur la figure 4. Il est à noter qu'au moins une des pattes 22 permet de renforcer l'effet élastique du moyen d'articulation 13 tout en évitant un écartement exagéré entre le bord arrière 11c et le bord avant 12c, un tel écartement se traduisant alors par une augmentation de l'angle α1. L'effet élastique participe également à la fonction de rattrapage de jeu longitudinal entre l'adaptateur 2 et partie terminale 9 du bras d'entraînement 3. En effet, au moins l'une des pattes 22 contraint la partie arrière 12 vers sa position de repos illustré à la figure 3.

De préférence, la patte 22 est de faible épaisseur pour conférer à la patte 22 une flexibilité optimisée lui permettant de se déformer entre la position de repos de l'adaptateur 2 représentée sur la figure 3 et la position d'utilisation de l'adaptateur 2 représentée sur la figure 4.

La partie arrière 12 est par exemple pourvue d'un moyen d'actionnement 23 dont un exemple est formé par une platine qui s'étend à l'intérieur d'un plan parallèle au plan Oxy, lorsque l'adaptateur 2 est en position d'utilisation, à l'arrière de la partie arrière 12 et dans une direction longitudinale. Le moyen d'actionnement 23 forme un organe de préhension de l'adaptateur 2 de la partie arrière 12 pour faire basculer cette dernière entre la position de repos de l'adaptateur 2 et la position de montage de l'adaptateur 2. Un tel moyen d'actionnement 23 permet d'assembler ou de séparer l'adaptateur 2 par rapport à la partie terminale 9 du bras d'entraînement 3.

Sur les figures 6 à 8, une variante de l'adaptateur 2 représenté sur les figures schématiques 3 à 5 est illustrée. Selon cette variante, l'adaptateur 2 est exempt de patte 22 et de languette arrière 23.

Sur la figure 6, l'extrémité avant 15 est profilé vers l'avant de l'adaptateur 2 de telle sorte que l'extrémité avant 15 présente une hauteur, prise entre une paroi supérieure 15a de l'extrémité avant 11a et le bord inférieur 20 selon l'axe vertical Z, qui diminue depuis le corps 14 vers l'avant de l'extrémité avant 15. L'extrémité avant 15 forme un nez qui prolonge longitudinalement la partie terminale 9 de manière à le profiler.

Chaque paroi latérale avant 11b du corps intermédiaire 14 est pourvue d'un doigt 24 qui émerge au-dessus de la paroi latérale avant 11b. De préférence, le doigt 24 est conformé en une portion cylindrique qui est ménagé au-dessus d'un plan formé par la paroi latérale avant 11b du corps intermédiaire 14. Le doigt 24 est prévu pour venir coulisser à l'intérieur d'une rainure 91 que comporte la partie terminale 9 du bras d'entraînement 3. Le diamètre du doigt 24 est préférentiellement inférieur à une largeur de la rainure 91 prise selon l'axe vertical Z, pour permettre un coulissement aisé du doigt 24 dans la rainure 91.

En limite de la partie avant 11 et de l'extrémité avant 15, cette dernière présente une première hauteur verticale H1, prise entre la paroi supérieure 15a de cette extrémité et le bord inférieur 20 de l'adaptateur 2 selon la direction Oz, qui est supérieure à une deuxième hauteur verticale H2 du corps 14, prise entre la paroi supérieure avant 11a et le bord inférieur 20 de l'adaptateur 2 selon la même direction Oz. En d'autres termes, l'extrémité avant 15 est plus haute que la première partie 11 de l'adaptateur 2, cette différence de hauteur étant par exemple égale à une épaisseur de la partie terminale 9 du bras d'entraînement 3. De manière complémentaire, l'extrémité avant 15 déborde également au-dessus de la première partie 11, en chevauchant longitudinalement celle-ci, au moins partiellement.

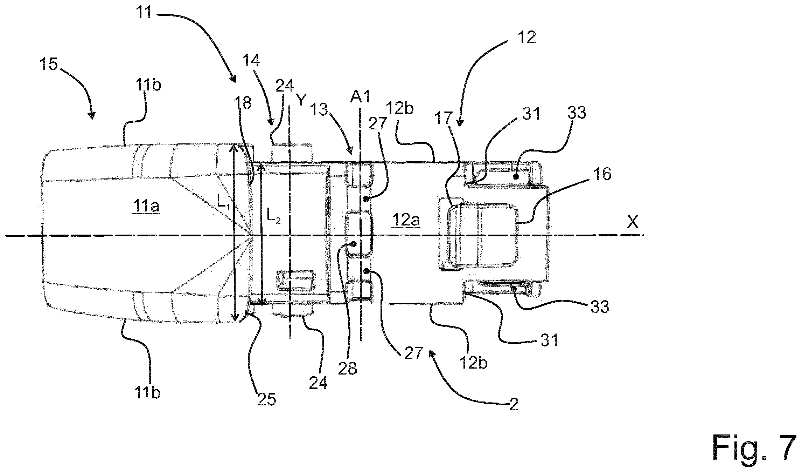

En se reportant sur la figure 7, en limite de la partie avant 11 et de l'extrémité avant 15a, cette dernière présente une première largeur transversale L1 prise entre les parois latérales avant 11b de l'extrémité avant 15 selon l'axe transversal Y, qui est supérieure à une deuxième largeur transversale L2 du corps 14, prise entre les parois latérales avant 11b, selon l'axe transversal Y. Il en résulte que l'extrémité avant 15 comporte une bordure 25 qui émerge au-dessus de la paroi supérieure avant 11a du corps 14. En d'autres termes, l'extrémité avant 15 est plus large que la première partie 11 de l'adaptateur 2. De manière complémentaire, l'extrémité avant 15 déborde également de chaque côté de la première partie 11. Cette différence de largeur est par exemple égale à deux fois l'épaisseur de la paroi constitutive de la partie terminale 9 du bras d'entraînement 3.

La bordure 25 constitue une butée à l'encontre d'une arête avant 92 que comporte la partie terminale 9 du bras d'entraînement 3.

La bordure 25 est équipée du crochet 18. Le crochet 18 est indifféremment une excroissance de la paroi supérieure de l'extrémité avant 15, tel que représenté sur les figures 3 et 4, ou bien un prolongement de cette paroi supérieure à partir de la bordure 15, tel que représenté sur les figures 6 à 8.

La bordure 25 comporte au moins un premier organe d'emboîtement 26 qui est de conformation complémentaire à au moins un deuxième organe d'emboîtement 93 que comporte l'arête avant 92 de la partie terminale 9 du bras d'entraînement 3. Le premier organe d'emboîtement 26 et le deuxième organe d'emboîtement 93 coopèrent ensemble pour faciliter une mise en contact et une mise en butée de la bordure 25 et de l'arête avant 92.

Selon la forme de réalisation illustrée, les premiers organes d'emboîtement 26 sont au nombre de deux et équipent respectivement les parois latérales avant 11b. Alternativement, l'organe d'emboîtement 26 peut être unique sur l'adaptateur 2. Chaque premier organe d'emboîtement 26 est par exemple conformé en un renflement demi-circulaire pour coopérer avec le deuxième organe d'emboîtement 93 que constitue un débouché de la rainure 91. Le premier organe d'emboîtement 26 et le deuxième organe d'emboîtement 93 évitent ensemble un déplacement vertical de l'adaptateur 2 par rapport à la partie terminale 9 du bras d'entraînement 3, en position d'utilisation de l'adaptateur 2.

Le ou les organes d'emboîtement 26 sont avantageusement des moyens de blocage vertical de l'adaptateur 2 dans la partie terminale 9 du bras d'entraînement 3.

La partie arrière 12 comprend au moins une rampe 31, et notamment deux rampes 31 qui sont ménagées verticalement et respectivement dans les parois latérales arrière 12b. Chacune des rampes 31 s'étend dans un plan sensiblement parallèle au plan Oyz. Les rampes 31 délimitent chacune une gorge 33 ménagée dans les parois latérales 12b.

Sur la figure 7, le moyen d'articulation 13 est par exemple formé d'au moins un pontet 27 qui relie la partie avant 11 et la partie arrière 12. Le moyen d'articulation 13 comprend notamment deux pontets 27 contigus qui sont espacés l'un de l'autre d'une ouverture 28. Chaque pontet 14 est par exemple formé d'une platine de faible épaisseur E prise selon l'axe vertical Z. Le moyen d'articulation 13 est simple à réaliser, notamment lors du moulage de l'adaptateur 2, une épaisseur E du moyen d'articulation 13 (visible sur la figure 6) étant par exemple inférieure à 15% de la deuxième hauteur H2, l'épaisseur E étant prise selon l'axe vertical Z entre des bords supérieur et inférieur des pontets 27. Une telle faible épaisseur des pontets 27 confère une flexibilité au moyen d'articulation 13 permettant l'articulation de la partie arrière 12 vis-à-vis de la partie avant 11.

On constate, sur la figure 7, la section en forme de « U » que l'adaptateur 2 selon l'invention peut prendre. Cette section en forme de « U » est formée par la paroi supérieure arrière 12a de la partie arrière 12 et les parois latérales 12b, ainsi que par la paroi supérieure avant 11a et les parois latérales avant 11b. Cette forme en « U » délimite un volume interne 32 agencé pour recevoir au moins en partie le connecteur 8 rendu solidaire du balai d'essuyage 1.

Ce volume interne peut également recevoir une languette 29 issue de moulage de la partie arrière 12, par exemple avec la paroi supérieure arrière 12a de la partie arrière 12. La languette 29 est prévue pour venir en contact contre le connecteur 8 en position d'utilisation de l'adaptateur 2. Une telle languette 29 forme un dispositif de sécurisation de la liaison mécanique entre l'adaptateur 2 installé dans la partie terminale 9 du bras d'entrainement 3. En effet, une fois l'adaptateur 2 installé dans la partie terminale 9, la languette 29 bloque le basculement de la partie arrière 12 par rapport à la partie avant 11, ce qui empêche le bouton 16 de sortir de l'orifice 90, par exemple lorsqu'il est exercé une traction sur le bras d'entrainement alors que le balai d'essuyage 1 est retenu sur le pare-brise par le gel, par exemple.

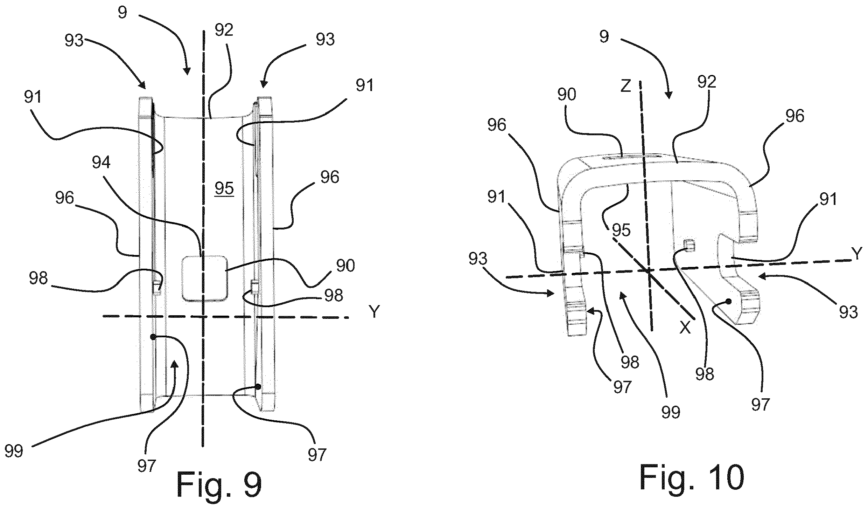

Sur les figures 9 et 10, la partie terminale 9 du bras d'entraînement 3 est agencée en « U », vu dans une coupe transversale parallèle au plan Oyz. La partie terminale 9 comprend une première paroi 95 formant la base du « U » et deux deuxièmes parois 96 sensiblement parallèles et formant les branches du « U ».

La première paroi 95 est équipé de l'orifice 90, ce dernier étant centré latéralement sur la première paroi 95 de la partie terminale 9. La première paroi 95 et les deuxièmes parois 96 sont délimitées en partie avant par l'arête avant 92 qui présente un profil transversal en « U ».

L'arête avant 92 est pourvue des deux rainures 91 qui sont ménagées longitudinalement à l'intérieur des deuxièmes parois 96. Les deux rainures 91 sont ménagées en vis-à-vis l'une de l'autre à travers une deuxième paroi 96 respective. Chaque rainure 91 comporte une ouverture 93 ménagée dans l'arête avant 92 pour permettre un passage d'un doigt 24 respectif de l'adaptateur 2.

Les deuxièmes parois 96 comportent chacune une surface interne 97 qui délimite, avec la première paroi 95, un volume intérieur 99 de la partie terminale 9. Chaque surface interne 97 est pourvue d'un plot 98 qui émerge de la surface interne 97 vers le volume intérieur 99. Chaque plot 98 est par exemple agencé en un cylindre d'axe perpendiculaire à la surface interne 97. On notera que les deux plots 98 sont situés à égale distance de l'arête avant 92, de sorte qu'une droite passant par le centre de ces deux plots 98 est parallèle à l'axe transversal Y.

Les plots 98 sont par exemple ménagés à l'arrière des rainures 91. Autrement dit, chaque rainure 91 est alignée avec un plot respectif 98 selon l'axe longitudinal X. Par ailleurs, l'orifice 90 et les plots 98 sont notamment ménagés à l'intérieur d'un plan transversal parallèle au plan Oxy, de telle sorte que l'orifice 90 surplombe verticalement les plots 98.

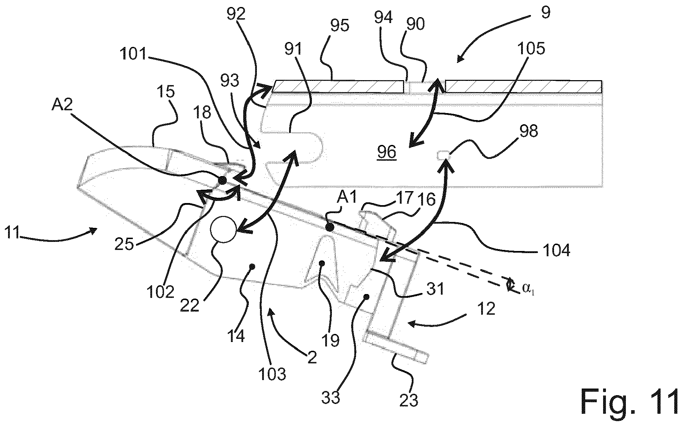

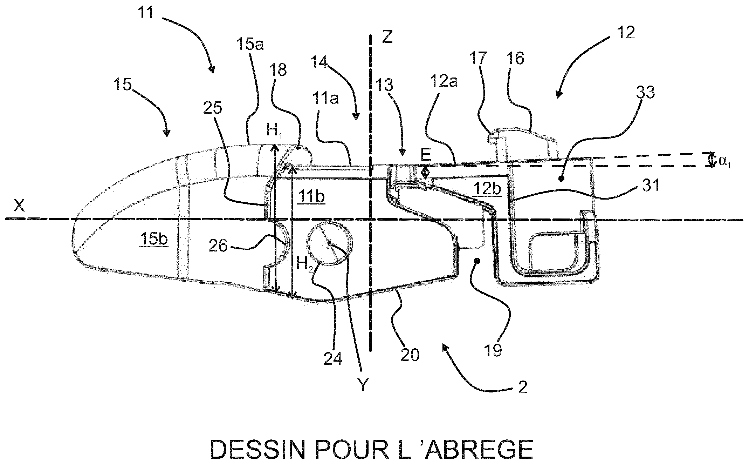

Sur la figure 11, un procédé d'assemblage de l'adaptateur 2 avec une partie terminale 9 du bras d'entraînement 3 comprend une première étape 101 de mise en butée du crochet 18 de l'adaptateur 2 et de l'arête avant 92 de la première paroi 95 de la partie terminale 9. La première paroi 95 vient ainsi se loger entre le crochet 18 et la paroi supérieure avant 11a de la partie avant 11.

Selon une deuxième étape 102 du procédé, il est prévu une mise en rotation de l'adaptateur 2 sur la partie terminale 9 autour d'un deuxième axe de rotation A2 sensiblement parallèle à l'axe transversal Y et passant par un point de contact entre le crochet 18 et l'arête avant 92, tels que rapprochés l'un de l'autre au cours de la première étape 101. Cette rotation est opérée jusqu'à ce que le bouton 16 soit disposé au droit de l'orifice 90.

A ce stade du procédé d'assemblage, le blocage de l'adaptateur 2 dans la partie terminale 9 peut être opéré selon deux étapes alternatives ou cumulatives.

Selon l'une de ces alternatives, le procédé comprend une troisième étape 103 qui consiste à exercer un effort sur la partie arrière 12 de sorte à la rapprocher de la partie avant 11 par le biais du moyen d'articulation 13. Un tel effort peut être exercé en appliquant une pression manuelle sur la platine arrière 23. Cette troisième étape 103 conduit à une réduction du premier angle α₁ en deuxième angle α₂ (figure 4) et à une réduction du troisième angle α₃ en quatrième angle α₄ (figure 4). La lumière débouchante 19 est alors fermée, ce qui conduit à rapprocher longitudinalement le bouton 16 de l'extrémité avant 15. Ce déplacement longitudinal du bouton 16 décale la dent 17 de sorte à lui permettre de pénétrer dans l'orifice 90. De manière synthétique, la troisième étape 103 consiste en un verrouillage manuel de l'adaptateur 2 dans la partie terminale 9.

Selon l'autre alternative, le procédé comprend une quatrième étape qui consiste en un verrouillage automatique de l'adaptateur 2 dans la partie terminale 9. En poursuivant la rotation débutée à la deuxième étape 102, les plots 98 pénètrent dans les gorges 33. Ce faisant, les plots 98 viennent en appui contre les rampes 31 de l'adaptateur 2, et coulissent contre ces dernières. Cette mise en appui provoque un effort qui génère un alignement de la paroi supérieure avant 11a avec la paroi supérieure arrière 12a, conduisant à une réduction du premier angle α₁ en deuxième angle α₂ (figure 4) et à une réduction du troisième angle α₃ en quatrième angle α₄ (figure 4). La lumière débouchante 19 est alors fermée, ce qui conduit à rapprocher longitudinalement le bouton 16 de l'extrémité avant 15. Ce déplacement longitudinal du bouton 16 décale la dent 17 de sorte à lui permettre de pénétrer dans l'orifice 90. Il en résulte une mise sous contrainte de la partie arrière 2 qui tend à reprendre sa position de repos dans laquelle la paroi supérieure avant 11a et de la paroi supérieure arrière 12a forment le premier angle α₁.

Selon une cinquième étape 105, on poursuit la rotation opérée au cours de la deuxième étape 102 de sorte à ce que la dent 17 franchisse la première paroi 95 et se retrouve au-dessus de celle-ci. Une fois que la paroi supérieure arrière 12a est en appui contre une face interne de la première paroi 95 de la partie terminale 9, une mise en contact du bouton 16 contre le bord transversal avant 94 de l'orifice 90 est opérée, à partir d'une tendance naturelle de la partie arrière 12 à reprendre sa position de repos lorsque l'effort de flexion est interrompu et ou au moyen d'une ou plusieurs pattes 22.

Dans un tel cas, la position d'utilisation implique que le deuxième angle α₂ est inférieur au premier angle α₁ tout en étant différent de 0°. Une différence de longueur entre une première distance séparant la bordure 25 et une face latérale avant du bouton 16 et une deuxième distance séparant le bord transversal avant 94 de l'orifice 90 de l'arête avant 92 de la partie terminale 9 symbolise le jeu longitudinal évoqué plus haut. La présence de ce jeu peut se traduire par des bruits ou des vibrations inappropriées. Le rattrapage de ce jeu opéré par la présence d'un angle non-nul entre la face supérieure avant 11a et la face supérieure arrière 12a en position d'utilisation permet d'éliminer ces inconvénients. On peut considérer que l'adaptateur 2 de l'invention comprend un dispositif de rattrapage de jeu longitudinal agencé pour limiter un mouvement longitudinal entre l'adaptateur 2 et la partie terminale 9 du bras d'entraînement 3.

Dans tous les cas, il en résulte ainsi un verrouillage optimisé de l'adaptateur 2 dans la partie terminale 9 et une interdiction d'un déverrouillage inopiné de l'adaptateur 2 rapporté sur la partie terminale 9 du bras d'entraînement 3, notamment lors de l'utilisation du système d'essuyage 4 mis en mouvement le long de la surface vitrée.

Le démontage de l'adaptateur hors de la partie terminale 9 du bras d'entraînement s'effectue selon des étapes inverses à celles décrites ci-dessus, moyennant un appui sur le bouton 16 qui provoque une rotation de la partie arrière et décale la dent 17 de sorte à lui permettre de sortir de l'orifice 90.

## Revendications

1. Adaptateur (2) destiné à équiper une partie terminale (9) d'un bras d'entraînement (3), l'adaptateur (2) comprenant au moins une partie avant (11) dont au moins une section est agencée en « U » et qui comporte une paroi supérieure avant (11a) et deux parois latérales avant (11b), l'adaptateur (2) comprenant au moins une partie arrière (12) dont au moins une section est agencée en « U » et qui comporte une paroi supérieure arrière (12a) et deux parois latérales arrière (12b), la partie avant (11) et la partie arrière (12) étant articulées l'une à l'autre par l'intermédiaire d'un moyen d'articulation (13) interposé entre la paroi supérieure avant (11a) et la paroi supérieure arrière (12a), **caractérisé en ce que** la paroi supérieure arrière (12a) comprend un bouton (16) qui émerge au-dessus de la paroi supérieure arrière (12a) et au moins un moyen de rotation configuré pour relier l'adaptateur (2) à un connecteur (10), ce moyen de rotation étant ménagé dans l'une des parois latérales avant (11b).

2. Adaptateur (2) selon la revendication 1, dans lequel la partie avant (11) et la partie arrière (12) sont alignées selon un axe longitudinal (X) de l'adaptateur (2).

3. Adaptateur (2) selon l'une quelconque des revendications précédentes, dans lequel la partie avant (11) comprend un corps (14) et une extrémité avant (15), le corps (14) étant relié à la partie arrière (12) par l'intermédiaire du moyen d'articulation (13).

4. Adaptateur (2) selon la revendication 3, dans lequel l'extrémité avant (15) et le corps (14) sont délimités par une bordure (25) qui surplombe le corps (14).

5. Adaptateur (2) selon la revendication 4, dans lequel la bordure (25) est équipée d'au moins un crochet (18).

6. Adaptateur (2) selon l'une quelconque des revendications précédentes, dans lequel le bouton (16) agencé sur la paroi supérieure arrière (12a) est pourvu d'une dent (17).

7. Adaptateur (2) selon l'une quelconque des revendications précédentes, dans lequel au moins une paroi latérale arrière (12b) est équipée d'une gorge (33) délimitée au moins par une rampe (31).

8. Adaptateur (2) selon l'une quelconque des revendications précédentes, dans lequel l'adaptateur (2) est pourvu d'un moyen d'actionnement (23) de la partie arrière (12).

9. Dispositif de connexion (8) formé d'un connecteur (10) et d'un adaptateur (9) selon l'une quelconque des revendications précédentes.

10. Bras d'entraînement (3) comprenant au moins une partie terminale (9) conformée en « U » et délimitée par une première paroi (95) et par deux deuxièmes parois (96) délimitant un volume intérieur (99) dans lequel est reçu un adaptateur (2) selon l'une quelconque des revendications 1 à 8 ou un dispositif de connexion (8) selon la revendication 9.

11. Bras d'entraînement (3) selon la revendication précédente, dans lequel la première paroi (95) est pourvue d'un orifice (90) de réception d'un bouton (16) pourvu d'une dent (17), l'orifice (90) comprenant un bord transversal avant (94) contre lequel le bouton (16) prend appui, la dent (17) s'étendant au-dessus de la première paroi (95).

12. Système d'essuyage comprenant un bras d'entraînement (3), un connecteur (10) solidaire d'un balai d'essuyage (1) et un adaptateur (2) selon l'une quelconque des revendications 1 à 8 reliant à rotation le connecteur (10) au bras d'entraînement (3).

13. Procédé d'assemblage d'un adaptateur (2) selon l'une quelconque des revendications 1 à 8 avec une partie terminale (9) d'un bras d'entraînement (3), dans lequel le procédé d'assemblage comprend :
- une première étape (101) de mise en contact d'une bordure (25) de l'adaptateur (2) contre une arête avant (92) d'une première paroi (95) de la partie terminale (9),
- une deuxième étape (102) qui consiste en une rotation de l'adaptateur (2) vis-à-vis de la partie terminale (9) autour du contact entre la bordure (25) et l'arête avant (92) opéré au cours de la première étape (101),
- une cinquième étape (105) où une dent (17) d'un bouton (16) de l'adaptateur (2) franchit la première paroi (95) et s'étend au-dessus de celle-ci.

14. Procédé d'assemblage selon la revendication précédente, au cours duquel est prévu entre la deuxième étape et la cinquième étape, alternativement ou cumulativement :
- une troisième étape (103) qui consiste en un verrouillage manuel de l'adaptateur (2) dans la partie terminale (9),
- une quatrième étape (104) qui consiste en un verrouillage automatique de l'adaptateur (2) dans la partie terminale (9).

## Patentansprüche

1. Adapter (2), der einen Endabschnitt (9) eines Antriebsarms (3) ausstatten soll, wobei der Adapter (2) mindestens einen vorderen Abschnitt (11) umfasst, von dem mindestens ein Querschnitt "U"-förmig angeordnet ist und der eine vordere obere Wand (11a) und zwei vordere Seitenwände (11b) umfasst, wobei der Adapter (2) mindestens einen hinteren Abschnitt (12) umfasst, von dem mindestens ein Querschnitt "U"-förmig angeordnet ist und der eine hintere obere Wand (12a) und zwei hintere Seitenwände (12b) umfasst, wobei der vordere Abschnitt (11) und der hintere Abschnitt (12) durch ein Gelenkmittel (13) gelenkig miteinander verbunden sind, das zwischen die vordere obere Wand (11a) und die hintere obere Wand (12a) eingefügt ist, **dadurch gekennzeichnet, dass** die hintere obere Wand (12a) einen Knopf (16), der über die hintere obere Wand (12a) hervorragt, und mindestens ein Drehmittel umfasst, das dazu konfiguriert ist, den Adapter (2) mit einem Verbindungselement (10) zu verbinden, wobei dieses Drehmittel in einer der vorderen Seitenwände (11b) ausgebildet ist.

2. Adapter (2) nach Anspruch 1, wobei der vordere Abschnitt (11) und der hintere Abschnitt (12) auf eine Längsachse (X) des Adapters (2) ausgerichtet sind.

3. Adapter (2) nach einem der vorhergehenden Ansprüche, wobei der vordere Abschnitt (11) einen Körper (14) und ein vorderes Ende (15) umfasst, wobei der Körper (14) mit dem hinteren Abschnitt (12) durch das Gelenkmittel (13) verbunden ist.

4. Adapter (2) nach Anspruch 3, wobei das vordere Ende (15) und der Körper (14) durch eine Einfassung (25) begrenzt sind, die den Körper (14) überragt.

5. Adapter (2) nach Anspruch 4, wobei die Einfassung (25) mit mindestens einem Haken (18) ausgestattet ist.

6. Adapter (2) nach einem der vorhergehenden Ansprüche, wobei der Knopf (16), der an der hinteren oberen Wand (12a) angeordnet ist, mit einem Zahn (17) versehen ist.

7. Adapter (2) nach einem der vorhergehenden Ansprüche, wobei mindestens eine hintere Seitenwand (12b) mit einer Nut (33) ausgestattet ist, die mindestens durch eine Rampe (31) begrenzt ist.

8. Adapter (2) nach einem der vorhergehenden Ansprüche, wobei der Adapter (2) mit einem Mittel (23) zur Betätigung des hinteren Abschnitts (12) versehen ist.

9. Verbindungsvorrichtung (8), die aus einem Verbindungselement (10) und einem Adapter (9) nach einem der vorhergehenden Ansprüche gebildet ist.

10. Antriebsarm (3) mit mindestens einem Endabschnitt (9), der "U"-förmig gestaltet ist und durch eine erste Wand (95) und durch zwei zweite Wände (96) begrenzt ist, die ein Innenvolumen (99) begrenzen, in dem ein Adapter (2) nach einem der Ansprüche 1 bis 8 oder eine Verbindungsvorrichtung (8) nach Anspruch 9 aufgenommen ist.

11. Antriebsarm (3) nach dem vorhergehenden Anspruch, wobei die erste Wand (95) mit einer Öffnung (90) zur Aufnahme eines Knopfs (16) versehen ist, der mit einem Zahn (17) versehen ist, wobei die Öffnung (90) einen vorderen transversalen Rand (94) umfasst, an dem der Knopf (16) anliegt, wobei sich der Zahn (17) über der ersten Wand (95) erstreckt.

12. Wischsystem mit einem Antriebsarm (3), einem Verbindungselement (10), das mit einem Wischerblatt (1) fest verbunden ist, und einem Adapter (2) nach einem der Ansprüche 1 bis 8, der das Verbindungselement (10) rotatorisch mit dem Antriebsarm (3) verbindet.

13. Verfahren zur Montage eines Adapters (2) nach einem der Ansprüche 1 bis 8 an einem Endabschnitt (9) eines Antriebsarms (3), wobei das Montageverfahren umfasst:
- einen ersten Schritt (101) zum Kontaktieren einer Einfassung (25) des Adapters (2) mit einer vorderen Kante (92) einer ersten Wand (95) des Endabschnitts (9),
- einen zweiten Schritt (102), der aus einer Drehung des Adapters (2) gegenüber dem Endabschnitt (9) um den Kontakt zwischen der Einfassung (25) und der vorderen Kante (92) besteht, der im Verlauf des ersten Schritts (101) herbeigeführt wird,
- einen fünften Schritt (105), in dem ein Zahn (17) eines Knopfs (16) des Adapters (2) die erste Wand (95) überquert und sich über diese erstreckt.

14. Montageverfahren nach dem vorhergehenden Anspruch, in dessen Verlauf zwischen dem zweiten Schritt und dem fünften Schritt alternativ oder kumulativ vorgesehen ist:
- ein dritter Schritt (103), der aus einer manuellen Verriegelung des Adapters (2) im Endabschnitt (9) besteht,
- ein vierter Schritt (104), der aus einer automatischen Verriegelung des Adapters (2) im Endabschnitt (9) besteht.

## Claims

1. Adapter (2) which is intended to be fitted to an end portion (9) of a drive arm (3), the adapter (2) comprising at least one front portion (11), at least one section of which is arranged in a U-shaped manner and which comprises a front upper wall (11a) and two front lateral walls (11b), the adapter (2) comprising at least one rear portion (12), at least one section of which is arranged in a U-shaped manner and which comprises a rear upper wall (12a) and two rear lateral walls (12b), the front portion (11) and the rear portion (12) being articulated to each other by way of an articulation means (13) that is interposed between the front upper wall (11a) and the rear upper wall (12a), **characterised in that** the rear upper wall (12a) comprises a button (16) which emerges above the rear upper wall (12a) and at least one rotation means configured to connect the adapter (2) to a connector (10), this rotation means being provided in one of the front lateral walls (11b).

2. Adapter (2) according to claim 1, wherein the front portion (11) and the rear portion (12) are aligned in accordance with a longitudinal axis (X) of the adapter (2).

3. Adapter (2) according to either of the preceding claims, wherein the front portion (11) comprises a body (14) and a front end (15), the body (14) being connected to the rear portion (12) by way of the articulation means (13).

4. Adapter (2) according to claim 3, wherein the front end (15) and the body (14) are delimited by a border (25) which overhangs the body (14).

5. Adapter (2) according to claim 4, wherein the border (25) is provided with at least one hook (18).

6. Adapter (2) according to any one of the preceding claims, wherein the button (16) provided in the rear upper wall (12a) is provided with a tooth (17).

7. Adapter (2) according to any one of the preceding claims, wherein at least one rear lateral wall (12b) is provided with a groove (33) which is delimited at least by a ramp (31).

8. Adapter (2) according to any one of the preceding claims, wherein the adapter (2) is provided with an actuation means (23) for the rear portion (12).

9. Connection device (8) formed by a connector (10) and an adapter (9) according to any one of the preceding claims.

10. Drive arm (3) comprising at least one end portion (9) which is U-shaped and which is delimited by a first wall (95) and by two second walls (96) which delimit an internal volume (99) in which there is received an adapter (2) according to any one of claims 1 to 9 or a connection device (8) according to claim 10.

11. Drive arm (3) according to the preceding claim, wherein the first wall (95) is provided with a receiving hole (90) for a button (16) which is provided with a tooth (17), the hole (90) comprising a front transverse edge (94) against which the button (16) abuts, the tooth (17) extending above the first wall (95).

12. Wiper system comprising a drive arm (3), a connector (10) which is fixedly joined to a wiper blade (1) and an adapter (2) according to any one of claims 1 to 9 which connects the connector (10) to the drive arm (3) for rotation.

13. Assembly method for an adapter (2) according to any one of claims 1 to 9 with an end portion (9) of a drive arm (3), in which the assembly method comprises:
- a first step (101) of placing a border (25) of the adapter (2) in contact against a front edge (92) of a first wall (95) of the end portion (9),
- a second step (102) which involves a rotation of the adapter (2) with respect to the end portion (9) about the contact between the border (25) and the front edge (92) carried out during the first step (101),
- a fifth step (105) in which a tooth (17) of a button (16) of the adapter (2) overcomes the first wall (95) and extends thereabove.

14. Assembly method according to the preceding claim, during which there is provision between the second step and the fifth step alternatively or cumulatively for:
- a third step (103) which involves manual locking of the adapter (2) in the end portion (9),
- a fourth step (104) which involves automatic locking of the adapter (2) in the end portion (9).
